# EUROPÄISCHE PATENTSCHRIFT

(11) **EP 1 347 268 B1**
(45) Veröffentlichungstag und Bekanntmachung des Hinweises auf die Patenterteilung: **25.05.2005**
(21) Anmeldenummer: 03003904.4
(22) Anmeldetag: 21.02.2003
(51) Int. Cl.: G01C 21/26, G08B 25/00, B60Q 1/52

(54) **Sicherheitssystem für ein Kraftfahrzeug**
Safety system for a motor vehicle
Système de sécurité pour un véhicule automobile

(30) Priorität: 22.03.2002 DE 10212763
(43) Veröffentlichungstag der Anmeldung: 24.09.2003
(73) Patentinhaber: AUDI AG, 85045 Ingolstadt (DE)
(72) Erfinder: Popken, Markus, 85139 Wettstetten (DE); Theinert, Bernd, 92339 Beilngries (DE)

(56) Entgegenhaltungen:
- EP-A- 1 060 950
- WO-A-01/50088
- US-A- 5 504 482

## Beschreibung

Die Erfindung betrifft ein Kraftfahrzeug mit einem System zur Erfassung eines unbeabsichtigten Verlassens der Fahrspur sowie einem Navigations- oder Positionserfassungssystem

Systeme zur Erfassung eines unbeabsichtigten Verlassens der Fahrspur, sogenannte "Spurverlassenswarner", sind bekannt und befinden sich zur Zeit in der Entwicklung zur Serienreife. Mit ihnen ist es möglich, die Fahrspur, auf der sich das Fahrzeug bewegt, beispielsweise der Mittelstreifen einer Autobahn, zu erfassen und ein Verlassen dieser Fahrspur ohne eine definitive Spurwechselabsicht des Fahrers, also zum Beispiel ein Wegdriften aufgrund einer Unaufmerksamkeit des Fahrers zu erfassen und den Fahrer zu warnen.

Ferner sind seit längerem Navigations- oder allgemein Positionserfassungssysteme für Kraftfahrzeuge bekannt, die es dem Fahrer auf einfache Weise ermöglichen, seinen Weg zu finden und einen gesuchten Ort zielgerichtet anzufahren. Diese Navigations- oder Positionserfassungssysteme arbeiten zumeist auf Basis von GPS (GPS = Global Positioning System) oder DGPS (DGPS = Differential Global Positioning System) und lassen eine sehr genaue Positionserfassung des Kraftfahrzeugs zu.

Aus EP-A-1060950 ist ein System bekannt, wobei die Warnblinkanlage abhängig von verschiedenen Fahrzeugzuständen automatisch eingeschaltet wird. Aus US-A-5504482 ist ein System bekannt, wobei ein Notruf automatisch ausgesandt wird im Fall eines Unfalls. Aus WO01/50088 ist ein System bekannt, das an den Benutzer eine Warnung ausgibt wenn ein unbeabsichtigtes Spurverlassen statt findet.

Der Erfindung liegt die Aufgabe zugrunde, ausgehend von den jeweiligen Grundfunktionalitäten der beiden Systeme eine neue Einsatzmöglichkeit anzugeben.

Zu diesem Zweck zeichnet sich ein erfindungsgemäßes Fahrzeug dadurch aus, dass eine Einrichtung zum Veranlassen eines über ein mobiles Telekommunikationsnetz geführten Rufs an eine externe Station unter Verwendung eines fahrzeugeigenen Telematic-Systems und/oder zum automatischen Einschalten der Warnblinkanlage bei Vorliegen
a) eines ein unbeabsichtigtes Spurverlassen anzeigenden Signals, und
b) eines vom Navigations- oder Positionserfassungssystem zu gebenden Signals, dass sich das Fahrzeug außerhalb einer Parkzone befindet, und
c) eines das Stehen des Fahrzeugs anzeigenden Signals vorgesehen ist.

Das Aussenden des Servicerufs an die externe Servicestation und/oder das automatische Einschalten der Warnblinkanlage erfolgt erfindungsgemäß in Abhängigkeit wenigstens dreier seitens der Einrichtung vorliegender, ihr also zuzuführende Signale. Zum einen eines von dem System zur Erfassung des unbeabsichtigten Spurwechsels zu gebenden Signals, wenn ein unbeabsichtigtes Spurverlassen sensiert wurde. Ein unbeabsichtigtes Spurverlassen wird in dem Moment erfasst, wenn die systemmäßigen Grundvoraussetzungen, auf deren Grundlage ein unbeabsichtigtes Spurverlassen angenommen werden kann, vorliegen. Normalerweise erfolgt in diesem Fall sofort eine Warnung des Fahrers. Das System ist aber nicht nur in der Lage, das momentane unbeabsichtigte Spurverlassen zu erfassen und zu verarbeiten, sondern auch zu speichern, dass die Spur ohne Absicht verlassen wurde, das heißt, dass diese Kenntnis auch zu einem etwas späteren Zeitpunkt noch vorhanden ist. Das Warnsystem hat zwar unmittelbar bei Erkennen des unbeabsichtigten Spurverlassens gearbeitet und die Warnung ausgegeben, jedoch war sie nicht erfolgreich, da der Fahrer die Spur nicht wieder eingenommen hat. Es wird hier also die einmal zeitlich früher erlangte Kenntnis, dass die Spur unbeabsichtigt verlassen wurde, im Rahmen des Signals genutzt. Als zweites Signal wird ein vom Navigations- oder Positionserfassungssystem zu gebendes Signal verarbeitet, welches anzeigt, dass sich das Fahrzeug außerhalb einer ausgewiesenen Parkzone befindet, dass das Fahrzeug also beispielsweise auf dem Standstreifen einer Autobahn steht, wo normalerweise ein Fahrzeug nicht stehen darf. Das dritte Signal ist ein geschwindigkeitsbezogenes Signal, das angibt, dass das Fahrzeug steht, also die Geschwindigkeit Null ist. Dieses Signal kann auf einfache Weise über die Geschwindigkeitserfassungseinrichtung gegeben werden.

Liegen also alle drei Signale kumulativ vor, so sind folgende Grundbedingungen für das erfindungsgemäße Arbeiten der Einrichtung gegeben:
- eine Fahrspur wurde vom Fahrer unbeabsichtigt verlassen,
- das Fahrzeug befindet sich nicht in einer Parkzone, und
- das Fahrzeug steht.

Diese Randbedingungen sind nun Grundlage für die Annahme, dass eine Panne oder ein sonstiger anomaler Umstand vorliegt, in dem der Fahrer Unterstützung braucht. Diese Unterstützung kann nun entweder der Gestalt sein, dass über die Einrichtung bei Vorliegen aller drei genannter Signale automatisch ein Serviceruf über das fahrzeuginterne Telematic-System an eine externe Servicestation gegeben wird. Solche Telematic-Systeme sind bekannt, sie ermöglichen die Informations- oder Datenübertragung über geeignete Telekommunikationsnetze zwischen dem Fahrzeug und beispielsweise einer Servicestation. Zweckmäßigerweise ist dieser Ruf nicht als Notruf, sondern als Serviceruf qualifiziert, der einen Rückruf der externen Station zum Kraftfahrzeug auslösen soll, da auch bei Vorliegen aller drei Signale nicht immer eine Notsituation auch tatsächlich gegeben ist, die die Anfahrt von Pannenhelfern oder gegebenenfalls eines Rettungswagens oder der Polizei oder dergleichen erfordert. Es ist auch denkbar, dass der Fahrer lediglich ein gewisses Unwohlsein, das ihm im Moment an der Weiterfahrt hindert, verspürt, etc. Im Rahmen dieses Rückrufs kann dann die Servicestation mit dem Fahrer die tatsächliche Situation besprechen und klären.

Alternativ oder zusätzlich zum Veranlassen dieses Servicerufs besteht ferner die Möglichkeit, über diese Einrichtung automatisch das Einschalten der Warnblinkanlage bei Vorliegen aller dreier Signale zu veranlassen. Die Warnblinkanlage macht das beispielsweise auf dem Standstreifen der Autobahn stehende Fahrzeug, das dort eine Gefahrenquelle darstellt, für den nachfolgenden Verkehr sichtbar, was insbesondere bei Dunkelheit sehr wichtig ist.

Die Erfindung gibt also mit besonderem Vorteil eine neuartige Verwendungsmöglichkeit bekannter Systeme an, die in ihrer Grundfunktionalität mit einander kombiniert werden, wodurch sich eine zusätzliche sicherheitstechnische Kombinationsfunktion ergibt.

In Weiterbildung des Erfindungsgedankens kann vorgesehen sein, dass die Einrichtung zum Veranlassen des Rufs und/oder dem Einschalten der Warnblinkanlage nur bei zusätzlichem Vorliegen wenigstens eines weiteren, einen Defekt oder eine Funktionsstörung eines Arbeits- oder Betriebselements des Fahrzeugs anzeigenden Signals ausgebildet ist. Nach dieser Erfindungsausgestaltung wird also die Einrichtung nur dann tätig, wenn zusätzlich zu den drei eingangs genannten Signalen wenigstens ein weiteres Signal vorliegt, das einen Defekt oder eine Funktionsstörung anzeigt. Ein solches Signal kann beispielsweise ein einen deutlich zu niedrigen Öldruck anzeigendes Signal sein oder ein Signal, das eine Funktionsstörung der Einspritzanlage anzeigt etc. Verwendet werden kann hier jedwedes Defekt- oder Funktionsstörungssignal, das einen hinreichend gewichtigen Defekt oder eine hinreichend schwerwiegende Funktionsstörung anzeigt. Durch die zusätzliche Verarbeitung auch dieses Signals wird die Entscheidung, ob tatsächlich eine Pannen- oder Notsituation gegeben ist, noch präziser, insbesondere kann, wenn der Defekt oder die Funktionsstörung auch dem Fahrer angezeigt wird, dieser dann im Rahmen des Rückrufs genaueres über die Ist-Situation mitteilen.

Besonders vorteilhaft ist es dabei, wenn die mit dem einen Defekt oder eine Funktionsstörung eines Arbeits- oder Betriebselements des Fahrzeugs anzeigenden Signal gegebene Information bei Veranlassung eines Rufs zusammen mit dem Ruf an die externe Station gebbar ist. Nach dieser Erfindungsausgestaltung wird, wenn der Ruf veranlasst wird, automatisch auch die Information über den Defekt oder die Funktionsstörung an die Servicestation gegeben, so dass diese bereits zum Zeitpunkt des Rückrufs weiß, welcher Defekt oder welche Funktionsstörung fahrzeugseitig vorliegt, so dass gegebenenfalls bereits entsprechende Maßnahmen eingeleitet oder vorbereitet werden können.

Um sicherzustellen, dass die Signale, die an die Einrichtung gegeben werden, in einem hinreichenden zeitlichen Zusammenhang stehen, so dass vermieden wird, dass aufgrund von Ereignissen, die längere Zeit zurückliegen und mit der Ist-Situation in keiner Verbindung stehen, die Einrichtung entweder den Ruf veranlasst oder die Warnblinkanlage einschaltet, kann erfindungsgemäß ferner vorgesehen sein, dass die zum Veranlassen des Rufs und/oder zum Einschalten der Warnblinkanlage zu gebenden Signale innerhalb einer vorbestimmten Zeit ≤ 2 min, insbesondere ≤ 1 min zu geben sind. Werden die Signale innerhalb der angegebenen Zeitspanne der Einrichtung gegeben, so ist davon auszugehen, dass diese tatsächlich die Ist-Situation beschreiben, so dass auf ihrer Grundlage die Entscheidung erfolgen kann.

Weitere Vorteile, Merkmale und Einzelheiten der Erfindung ergeben sich aus dem nachfolgend beschriebenen Ausführungsbeispiel sowie anhand der Zeichnung.

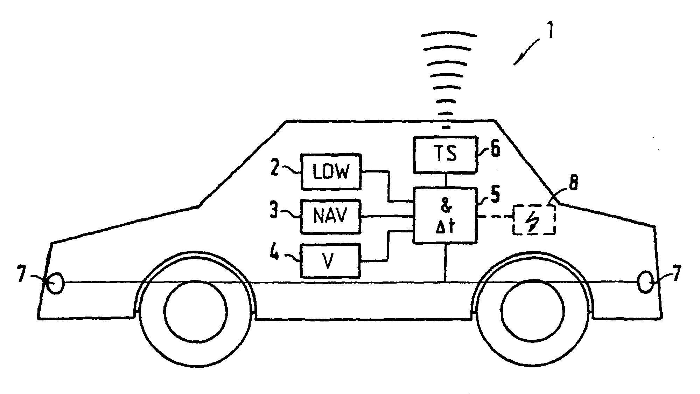

Fig. 1 zeigt eine Prinzipskizze eines erfindungsgemäßen Kraftfahrzeugs 1 zur Darstellung der erfindungsgemäßen Funktionsabläufe und Signal- und Arbeitszusammenhänge. Es sind lediglich die relevanten, für die erfindungsgemäße Arbeitsweise benötigten Komponenten dargestellt.

Das Kraftfahrzeug 1 verfügt zum einen über ein System 2 zur Erfassung eines unbeabsichtigten Verlassens der Fahrspur, das mit "LDW" (LDW = Lane Departure Warning) gekennzeichnet ist. Ferner ist ein Navigations- oder Positionserfassungssystem 3 vorgesehen, das mit "NAV" gekennzeichnet ist. Weiterhin ist eine Einrichtung 4 zur Erfassung der Ist-Geschwindigkeit des Fahrzeugs vorgesehen, die mit "v" gekennzeichnet ist. Die Systeme oder Einrichtungen 2, 3, 4 sind hinreichend bekannt, was ihre Arbeitsweise sowie die hierfür erforderlichen Komponenten angeht, so dass dies keiner näheren Ausführung bedarf.

Das System zur Erfassung des Spurverlassens 2, das Navigations- oder Positionserfassungssystem 3 sowie die Geschwindigkeitserfassungseinrichtung 4 sind mit einer Einrichtung 5 vernetzt, wobei hier eine unmittelbare Vernetzung dargestellt ist. Selbstverständlich ist es möglich, jedwedes andere Vernetzungsmuster zu wählen, z.B. über einen vorhandenen Fahrzeugbus etc. Dieser Einrichtung 5 werden nun von den Systemen oder der Einrichtung 2, 3, 4 gegebene Signale zur Verarbeitung zugeführt. Vom System 2 wird ein Signal gegeben, wenn mit diesem System erfasst wurde, dass die Spur tatsächlich verlassen wurde, wenn also der Fahrer trotz Warnung über das System 2 nicht wieder auf die Fahrspur zurückgekehrt ist, wobei dieser Spurwechsel ohne konkrete Spurwechselabsicht erfolgt ist. Das heißt, das Signal wird gegeben, wenn die Spur bereits verlassen worden ist. Über das Navigationssystem 3 wird ein Signal an die Einrichtung 5 gegeben, das die Ist-Position des Fahrzeugs angibt und insbesondere, dass sich das Kraftfahrzeug 1 nicht auf einem ausgewiesenen Parkplatz oder einer Parkposition befindet, die zu diesem Zweck vorgesehen ist. Dieses Signal gibt also an, dass sich das Fahrzeug letztlich an einer Stelle befindet, wo es grundsätzlich nicht parken darf oder sollte. Auch zusätzliche Einrichtungen wie eine fahrzeugseitige Videokamera mit einer Bildanalyseeinrichtung kann zur genaueren Erfassung und Beschreibung des Ortes genutzt werden, sofern vorhanden. Schließlich wird über die Geschwindigkeitserfassungseinrichtung 4 ein die Geschwindigkeit beschreibendes Signal an die Einrichtung 5 gegeben.

Die Einrichtung 5 verarbeitet nun die gegebenen Signale, wobei in Abhängigkeit der Signale bzw. des Verarbeitungsergebnisses entweder ein Service-Ruf über ein fahrzeugeigenes Telematic-System 6, gekennzeichnet mit "TS", an eine externe Servicestation zum Zweck eines Rückrufs von der Servicestation an das Kraftfahrzeug 1 veranlasst werden kann, oder aber (gegebenenfalls auch zusätzlich) die Warnblinkleuchten 7 am Kraftfahrzeug 1 über die Einrichtung 5 eingeschaltet werden können. Jede dieser Tätigkeiten setzt jedoch voraus, dass zum einen die von den Systemen beziehungsweise der Einrichtung 2, 3, 4 gegebenen Signale anzeigen, dass die Spur ohne Spurwechsel- oder Spurverlassensabsicht verlassen wurde, dass sich das Fahrzeug nicht in einer ausgewiesenen Parkzone befindet, und dass das Fahrzeug steht, also die Geschwindigkeit Null ist. Diese drei Signale müssen mit diesem Informationsgehalt kumulativ vorliegen, wie durch das "&"-.Zeichen angegeben ist. Zum anderen müssen diese Signale innerhalb einer vorgegebenen Zeitspanne gegeben werden, wie durch das Symbol "Δt" angedeutet ist. Die drei Signale müssen beispielsweise innerhalb einer Zeitspanne ≤ 2 min, insbesondere ≤ 1 min gegeben werden. Sind diese Bedingungen erfüllt und die entsprechenden Signalinhalte gegeben so kann die Einrichtung je nach ihrer Auslegung entweder den Serviceruf über das Telematic-System 6 veranlassen, oder die Warnblinkleuchte 7 einschalten, oder beides veranlassen.

Ferner ist die Möglichkeit gegeben, über ein geeignetes Erfassungsmittel 8- oder natürlich mehrerer solcher Mittel - Defekte oder Funktionsstörungen von Arbeits- oder Betriebselementen des Kraftfahrzeugs 1, z.B. des Motors oder des Getriebes oder der Lenkeinrichtung oder des Bremssystems zu erfassen und solche erfassten Funktionsstörungen oder Defekte in Form entsprechender Signale ebenfalls der Einrichtung 5 zu geben. Die Einrichtung 5 verarbeitet auch diese Signale in entsprechender Weise wie oben beschrieben, das heißt es muss zur Gabe des Rufs und/oder zum Einschalten der Warnblinkanlage ein solches Defekt- oder Funktionsstörungssignal zusammen mit den drei anderen genannten Signalen vorliegen, gegebenenfalls muss dieses Signal hinreichende Priorität aufweisen (das heißt der erfasste Defekt oder die Funktionsstörung muss hinreichend schwerwiegend sein), und schließlich muss auch dieses Signal innerhalb der gegebenen Zeitspanne gegeben werden. Da diese Möglichkeit jedoch optional ist, ist das Mittel wie auch die Verbindung lediglich gestrichelt dargestellt. Die Funktionsstörung oder der Defekt ist durch das Blitz-Symbol dem Grunde nach dargestellt.

Wird ein solches Defekt- oder Funktionsstörungssignal verarbeitet, so besteht die Möglichkeit, dieses Signal zusammen mit dem Serviceruf über das Telematic-System 6 an die externe Service-Station zu geben, so dass dort bereits eine erste Grundinformation über die anzunehmender Weise gegebene Panne beziehungsweise den Defekt oder die Funktionsstörung des Kraftfahrzeugs 1 gegeben ist. Im Rahmen des auf den Serviceruf hin erfolgenden Rückrufs, während dem dann die Service-Station, z.B. ein Call-Center oder dergleichen, mit dem Fahrer die Situation bespricht und klärt, kann dann genaueres hinsichtlich des Defekts oder der Funktionsstörung erörtert werden.

## Patentansprüche

1. Kraftfahrzeug mit einem System (2) zur Erfassung eines unbeabsichtigten Verlassens der Fahrspur sowie einem Navigations- oder Positionserfassungssystem (3),
**dadurch gekennzeichnet,**
**dass** eine Einrichtung (5) zum Veranlassen eines über ein mobiles Telekommunikationsnetz geführten Rufs an eine externe Station unter Verwendung eines fahrzeugeigenen Telematic-Systems (6) und/oder zum automatischen Einschalten der Warnblinkanlage (7) bei Vorliegen
a) eines ein unbeabsichtigtes Spurverlassen anzeigenden Signals, und
b) eines vom Navigations- oder Positionserfassungssystemsystem (3) zu gebenden Signals, dass sich das Fahrzeug außerhalb einer Parkzone befindet, und
c) eines das Stehen des Fahrzeugs anzeigenden Signals vorgesehen ist.

2. Kraftfahrzeug nach Anspruch 1,
**dadurch gekennzeichnet,**
**dass** die Einrichtung (5) zum Veranlassen des Rufs und/oder dem Einschalten der Warnblinkanlage (7) nur bei Vorliegen wenigstens eines weiteren, einen Defekt oder eine Funktionsstörung eines Arbeits- oder Betriebselements des Fahrzeugs (1) anzeigenden Signals ausgebildet ist.

3. Kraftfahrzeug nach Anspruch 2,
**dadurch gekennzeichnet,**
**dass** die mit dem einen Defekt oder eine Funktionsstörung eines Arbeits- oder Betriebselements des Fahrzeugs (1) anzeigenden Signal gegebene Information bei Veranlassung eines Rufs zusammen mit dem Ruf an die externe Station gebbar ist.

4. Kraftfahrzeug nach einem der vorangehenden Ansprüche,
**dadurch gekennzeichnet,**
**dass** die zum Veranlassen des Rufs und/oder zum Einschalten der Warnblinkanlage (7) zu gebenden Signale innerhalb einer vorbestimmten Zeit ≤ 2 min, insbesondere ≤ 1 min zu geben sind.

## Claims

1. Motor vehicle with a system (2) for detection of an unintentional departure from the carriageway lane and with a navigation or position detection system (3),
**characterised in that**
a device (5) is provided for initiation of a call via a mobile telecommunications network to an external station using an on-board telematic system (6) and/or for automatic activation of the hazard warning lights (7) in the event of
(a) a signal indicating an unintentional departure from the lane, and
(b) a signal given by the navigation or position detection system (3) that the vehicle is outside a parking area, and
(c) a signal indicating that the vehicle is at a standstill.

2. Motor vehicle according to claim 1,
**characterised in that**
the device (5) is designed for initiation of the call and/or activation of the hazard warning lights (7) only in the event of at least one other signal indicating a defect or malfunction in a working or operating part of the vehicle (1).

3. Motor vehicle according to claim 2,
**characterised in that**
the information given by the signal indicating a defect or malfunction in a working or operating part of the vehicle (1) on initiation of a call may be given to the external station with the call.

4. Motor vehicle according to one of the foregoing claims,
**characterised in that**
the signals given for initiation of the call and/or activation of the hazard warning lights (7) are to be given within a predetermined time ≤ 2 minutes, in particular ≤ 1 minute.

## Revendications

1. Véhicule automobile comprenant un système (2) pour détecter un abandon intempestif de la piste de roulage, ainsi qu'un système de navigation ou de détection de position (3),
**caractérisé en ce qu'**est prévu
un dispositif (5), ayant comme but de provoquer un appel, passé sur un réseau de télécommunication mobile à une station externe, avec utilisation d'un système télématique (6) propre au véhicule et/ou pour la mise en service automatique de l'installation de clignotement d'avertissement (7) en cas de présence
a) d'un signal indiquant un abandon intempestif de la piste, et
b) d'un signal, devant être fourni par un système de navigation ou de détection de position (3), indiquant que le véhicule se trouve hors d'une zone de stationnement, et
c) d'un signal, indiquant que le véhicule stationnaire.

2. Véhicule automobile selon la revendication 1,
**caractérisé en ce que**
le dispositif (5), provoquant l'appel et/ou la mise en service de l'installation de clignotement d'avertissement (7), n'est constitué qu'en cas de présence d'au moins un autre signal, affichant à défaut ou une perturbation fonctionnelle d'un élément de travail ou de fonctionnement du véhicule (1).

3. Véhicule automobile selon la revendication 2,
**caractérisé en ce que**
l'information, fournie par le signal indiquant un défaut ou une perturbation fonctionnelle d'un élément de travail ou de fonctionnement du véhicule (1), est susceptible d'être transmise dans le cas où un appel a été provoqué, conjointement avec l'appel à la station externe.

4. Véhicule automobile selon l'une des revendications précédentes,
**caractérisé en ce que**
les signaux à fournir pour provoquer l'appel et/ou la mise en service de l'installation de clignotement d'avertissement (7) sont à émettre dans les limites d'une durée prédéterminée ≤ 2 min, en particulier ≤ 1 min.
